# EUROPEAN PATENT SPECIFICATION

(11) **EP 0 633 640 B1**
(45) Date of publication and mention of the grant of the patent: **17.06.1998**
(21) Application number: 94301166.8
(22) Date of filing: 18.02.1994
(51) Int. Cl.: H02H 3/33

(54) **An earth leakage unit**
Eine Erdschlusseinheit
Une unité de courant de défaut à la terre

(30) Priority: 09.07.1993 ZA 934962
(43) Date of publication of application: 11.01.1995
(60) Divisional application: 95114440.1
(73) Proprietor: CIRCUIT BREAKER INDUSTRIES LIMITED, Elandsfontein Transvaal Province (ZA)
(72) Inventor: Bagalini, Dante, Johannesburg, Transvaal Province (ZA)
(74) Representative: Hackett, Sean James

(56) References cited:
- FR-A- 2 394 911
- GB-A- 2 244 398

## Description

This invention relates to an earth leakage unit.

The invention provides an earth leakage unit as claimed in claim 1, to which reference is directed. An earth leakage unit having the features contained in the preamble of claim 1 is known from the British patent application GB-A-2 244 398.

It will be appreciated that, with a single phase system, in use, a live and neutral wire pass through the core. The auxiliary coil and current supply means may then be connected between the neutral supply cable and an earth of an electrical system with which the earth leakage unit is used, between the live supply cable and the earth, or between the live and neutral supply cables. It will be appreciated that, if the auxiliary coil is connected between the neutral and earth the unit will trip if the voltage on the neutral line rises above a predetermined value, as can occur if the neutral voltage to earth exceeds a predetermined value, or if the neutral line is lost altogether. Similarly, if the auxiliary coil is connected between the live line and either the earth or neutral line, the unit will provide over-voltage protection.

It will be appreciated further by those skilled in the art that earth leakage units usually also have a test coil wound on the core by means of which the earth leakage unit may be tested. Conveniently, the auxiliary coil may also be used for this purpose. Thus, the auxiliary coil may also be connected to a DC voltage supply (which may pulsate) via a test button. The test button may be in parallel with the current supply means.

The current supply means may conveniently comprise a pair of back-to-back zener diodes in series with a current limiting resistor.

Further, the earth leakage unit may have a DC supply means for supplying DC power to electronic components of the unit, the DC supply means being connected across the live and neutral wires.

The invention is now described, by way of examples, with reference to the accompanying drawings, in which:-
Figure 1 is a schematic circuit diagram of a portion of an earth leakage unit
Figure 2 is a schematic circuit diagram of an earth leakage unit in accordance with the invention;
Figure 3 is a schematic circuit diagram of a portion of an earth leakage unit and
Figure 4 is a schematic circuit diagram of another earth leakage unit in accordance with the invention.

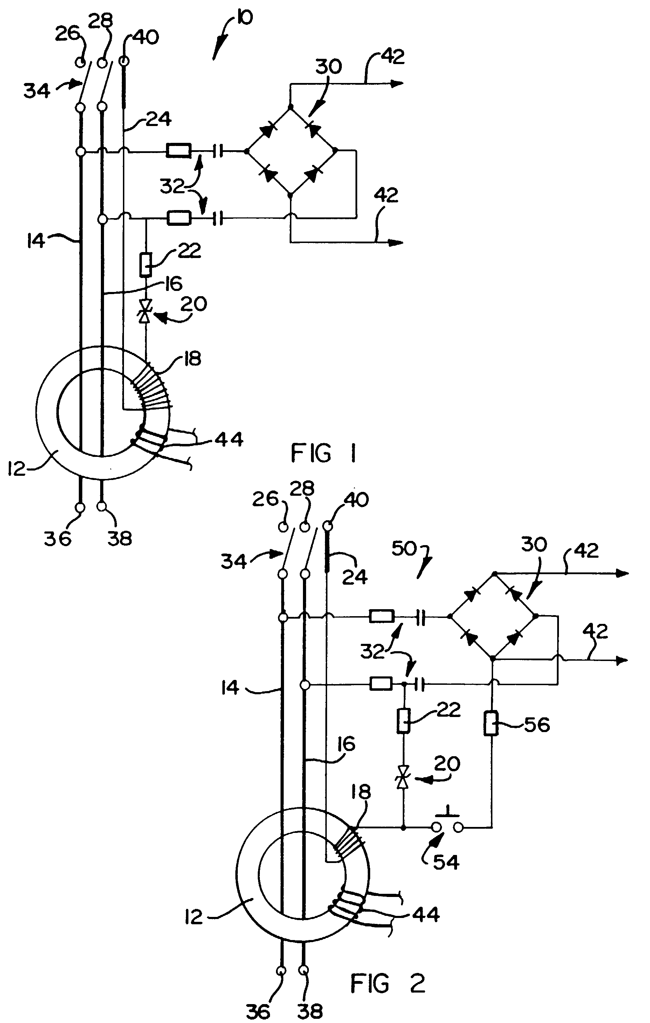

Referring to Figure 1, an earth leakage unit is indicated generally by reference numeral 10. It must be appreciated that Figure 1 does not show all the components of the earth leakage unit.

As with conventional earth leakage units, the earth leakage unit 10 shown in Figure 1 has a core 12 through which a live wire 14 and a neutral wire 16 pass. The live wire 14 and neutral wire 16 are connected to input terminals 26 and 28 respectively via contacts 34. In use, the terminals 26 and 28 are connected to live and neutral supply cables. The live and neutral wires 14 and 16 are also connected to output terminals 36 and 38 which, in use, are connected to a load (usually via a circuit breaker).

The earth leakage unit 10 has a further input terminal 40 which is connected, in use, to an earth of the electrical reticulation system.

A sensing coil 44 is wound on the core 12. The sensing coil 44 senses an imbalance in current in the wires 16 and 18.

The earth leakage unit 10 further has an auxiliary coil 18 wound on the core 12. One end of the coil 18 is connected to the earth terminal 40 and the other to the neutral wire 16 via a resistor 22 and a pair of back-to-back zener diodes 20.

The earth leakage unit 10 still further has a DC supply arrangement comprising a full wave rectifier 30 connected to the live wire 14 and neutral wire 16 via resistors and capacitors 32 and connected to electronic circuitry (not shown) via leads 42.

In use, if there is an imbalance in the current in the live wire 14 and neutral wire 16, this causes a magnetic field to be generated in the core 12 which induces a voltage in a sensing coil 44 which is detected by electronic circuitry (not shown) and the contact 34 is operated.

If the voltage on the neutral wire 16 increases, with respect to earth, above a predetermined value (as determined by the zener diodes 20) current flows through the auxiliary coil 18 which increases the magnetic field in the core 12. This is sensed by the sensing coil 44 and the contact 34 is energised.

Similarly, if the neutral supply line drops out the current supplying power to the electronic circuitry via the rectifier 30 will flow to earth via the coil 18 and will also cause the earth leakage unit 10 to trip out.

Referring to Figure 2 a further earth leakage unit 50 is shown. This unit 50 is similar to the earth leakage unit 10 shown in Figure 1 and is referenced in a similar manner.

With the earth leakage unit 50 shown in Figure 2, the auxiliary coil 18 is also utilised to provide a test function. Thus, instead of providing a further coil, as is normally the case, which is connected to the rectifier 30 via a test button, the rectifier 30 is connected to the junction between the zener diodes 20 and the coil 18 via a push button switch 54 and a resistor 56. Further, the other side of the zener diodes 20 is connected to the neutral wire 16 via the smoothing resistor 32 instead of to the neutral wire 16 directly. If the switch 54 is closed current flows through the coil 18 to earth, thereby simulating a fault and causing the earth leakage unit 50 to trip.

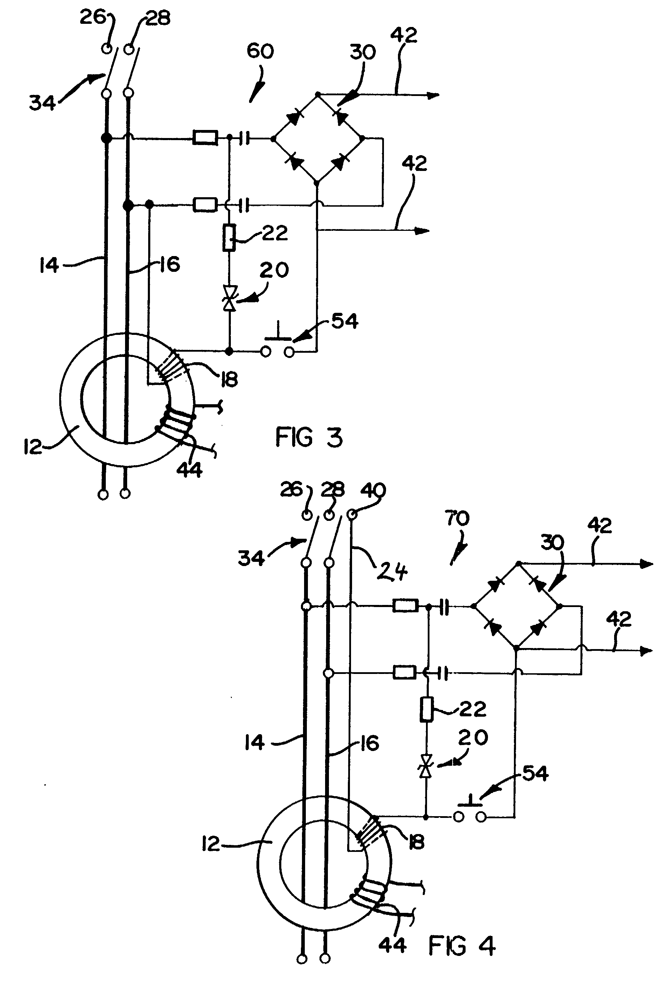

Referring further to Figure 3, a further embodiment of an earth leakage unit is designated generally by reference numeral 60. This earth leakage unit 60 is similar to the earth leakage unit 50 shown in Figure 2. However, instead of the coil and its associated zener diodes 20 and resistor 22 being connected between the earth and the live wire, they are connected between the live wire 14 and the neutral wire 16. Thus, if the supply voltage exceeds a predetermined value, current will flow through the auxiliary coil 18 and the earth leakage unit 60 will trip.

The earth leakage unit 70 shown in Figure 4 is the same as earth leakage unit 50 shown in Figure 2 except that the coil 18, zener diodes 20 and resistor 22 are connected between the live wire and earth. With the embodiment of Figure 4, the earth leakage unit 70 will trip if the line supply voltage exceeds a predetermined value relative to earth.

Further, with the embodiments shown in Figures 2 and 4, the test button will not operate the unit if the earth is not connected or if it has a high resistance. This will show a potentially dangerous condition of the installation.

## Claims

1. An earth leakage unit (50,70) which includes
a core (12);
a plurality of wires (14,16,24) including at least two load current carrying wires (14,16) which pass through the core and are connectable between an electrical supply means (26,28,40) and a load for supplying current to the load;
a primary coil (44) on the core for detecting a current imbalance in the load current carrying wires;
an auxiliary coil (18) on the core;
an electrical circuit (20,22) connecting the auxiliary coil to first and second wires selected from the plurality of wires, the electrical circuit being operable to carry current to the auxiliary coil when a voltage exists between the first and second wires and having a current blocking means (20) to provide current flow to the auxiliary coil only when the voltage between the first and second wires exceeds a predetermined value, the current blocking means being connected in the circuit in series with the auxiliary coil between the first and second wires to be responsive to a voltage difference between the first and second wires;
a DC supply arrangement (30) connected between a selected pair of the plurality of wires; and
a test button, characterised in that
the second wire is an earth wire (24);
a first end of the auxiliary coil is connected to the first wire via the current blocking means;
an opposite second end of the auxiliary coil is connected directly to the earth wire; and
the test button is connected between an output of the DC supply arrangement and the first end of the auxiliary coil.

2. An earth leakage unit as claimed in claim I for a single phase system wherein the load current carrying wires are two in number and comprise a live wire (14) and a neutral wire (16).

3. An earth leakage unit as claimed in claim 2, in which the current blocking means comprises a pair of back-to-back zener diodes.

4. An earth leakage unit as claimed in claim 2, in which the first wire is the neutral wire.

5. An earth leakage unit as claimed in claim 2, in which the first wire is the live wire.

6. An earth leakage unit as claimed in any preceding claim, in which the test button is connected directly to the first end of the auxiliary coil.

## Patentansprüche

1. Fehlerstromschutzschalter (50, 70) mit:
einem Kern (12),
mehreren Leitungen (14, 16, 24), von denen mindestens zwei (14, 16) einen Laststrom führen und durch einen Kern laufen und zwischen eine elektrische Versorgung (26, 28, 14) und eine Last schaltbar sind, um die Last mit Strom zu versorgen,
einer Primärspule (44) auf dem Kern, um ein Stromungleichgewicht in den laststromführenden Leitungen festzustellen,
einer Hilfsspule (18) auf dem Kern,
einer elektrischen Schaltung (20, 22), die die Hilfsspule an erste und zweite Leitungen der mehreren Leitungen anschließt, wobei die elektrische Schaltung der Hilfsspule einen Strom zuführt, wenn eine Spannung zwischen erster und zweiter Leitung anliegt, und Stromsperrmittel (20) aufweist, um der Hilfsspule nur dann einen Strom zuzuführen, wenn die Spannung zwischen erster und zweiter Leitung einen vorbestimmten Wert überschreitet, wobei die Stromsperrmittel in der Schaltung in Reihe mit der Hilfsspule zwischen die erste und die zweite Leitung geschaltet sind, um auf eine Spannungsdifferenz zwischen erster und zweiter Leitung zu reagieren,
einer Gleichspannungsversorgung (30) zwischen einem ausgewählten Paar der mehreren Leitungen und
einem Testschalter,
dadurch gekennzeichnet, daß
die zweite Leitung ein Schutzleiter (24) ist,
ein erster Anschluß der Hilfsspule an die erste Leitung über die Stromsperrmittel angeschlossen ist,
der andere Anschluß der Hilfsspule direkt an den Schutzleiter angeschlossen ist und
der Testschalter zwischen einem Ausgang der Gleichspannungsversorgung und dem ersten Anschluß der Hilfsspule angeschlossen ist.

2. Fehlerstromschutzschalter nach Anspruch 1 für ein Einphasensystem, bei dem zwei laststromführende Leitungen vorgesehen sind, die eine Phase (14) und einen Nulleiter (16) aufweisen.

3. Fehlerstromschutzschalter nach Anspruch 2, bei dem die Stromsperrmittel zwei in Reihe geschaltete und mit ihren Kathoden verbundene Zenerdioden aufweisen.

4. Fehlerstromschutzschalter nach Anspruch 2, bei dem die erste Leitung der Nulleiter ist.

5. Fehlerstromschutzschalter nach Anspruch 2, bei dem die erste Leitung die Phase ist.

6. Fehlerstromschutzschalter nach einem der vorhergehenden Ansprüche, bei dem der Testschalter direkt an den ersten Anschluß der Hilfsspule angeschlossen ist.

## Revendications

1. Unité de courant de défaut à la terre qui comprend :
un noyau (12);
une pluralité de câbles (14, 16, 24) incluant au moins deux câbles porteurs de courant de charge (14, 16) qui traversent le noyau (12) et qui peuvent être connectés entre des moyens d'alimentation électrique (26, 28, 40) et une charge pour délivrer du courant à la charge;
une bobine primaire (44) sur le noyau pour détecter un déséquilibre de courant dans les câbles porteurs de courant de charge;
une bobine auxiliaire (18) sur le noyau;
un circuit électrique (20, 22) connectant la bobine auxiliaire à des premier et second câbles choisis parmi une pluralité de câbles, le circuit électrique pouvant fonctionner de manière à apporter un courant à la bobine auxiliaire lorsqu'il existe une tension entre le premier et le second câble et comportant des moyens de blocage du courant (20) pour fournir un flux de courant à la bobine auxiliaire uniquement lorsque la tension entre le premier et le second câble dépasse une valeur prédéterminée, les moyens de blocage de courant étant connectés en série dans le circuit, la bobine auxiliaire entre le premier et le second câbles étant activée en réponse à une différence de tension entre le premier et le second câble;
un système d'alimentation en courant continu (30) connecté entre une paire sélectionnée de la pluralité de câbles; et
un bouton test, caractérisé en ce que :
le second câble est un câble à la terre (24);
une première extrémité de la bobine auxiliaire est connectée au premier câble par l'intermédiaire des moyens de blocage de courant;
une seconde extrémité opposée de la bobine auxiliaire est connectée directement au câble à la terre; et
le bouton test est connecté entre une sortie de système d'alimentation en courant continu et la première extrémité de la bobine auxiliaire.

2. Unité de courant de défaut à la terre selon la revendication 1 pour un système à phase unique dans laquelle les câbles porteurs de courant de charge sont au nombre de deux et ils comprennent un câble sous tension (14) et un câble neutre (16).

3. Unité de courant de défaut à la terre selon la revendication 2 dans laquelle les moyens de blocage de courant comprennent des diodes de Zener en opposition.

4. Unité de courant de défaut à la terre selon la revendication 2 dans laquelle le premier câble est le câble neutre.

5. Unité de courant de défaut à la terre selon la revendication 2 dans laquelle le premier câble est le câble sous tension.

6. Unité de courant de défaut à la terre selon l'une quelconque des revendications précédentes dans laquelle le bouton test est connecté directement à la première extrémité de la bobine auxiliaire.
